# EUROPEAN PATENT APPLICATION

(11) **EP 2 557 619 A1**
(43) Date of publication of application: **13.02.2013**
(21) Application number: 10848386.8
(22) Date of filing: 25.03.2010
(51) Int. Cl.: H01M 4/485, H01M 4/58, H01M 10/0525

(54) **ACTIVE MATERIAL FOR BATTERY, AND BATTERY**

(71) Applicant: Toyota Jidosha Kabushiki Kaisha, Toyota-shi, Aichi 471-8571 (JP)
(72) Inventor: OKI, Hideki, Toyota-shi Aichi 471-8571 (JP); KAWAMOTO, Koji, Toyota-shi Aichi 471-8571 (JP)
(74) Representative: Duckworth, Timothy John
(86) International application number: PCT/JP2010/055201
(87) International publication number: WO 2011/117993

(57) **Abstract**

A main object of the present invention is to an active material for battery having a high thermal stability and a low electric potential. The object is attained by providing the active material for battery contains an Y element, a Ba element, a Cu element, and an O element and contains a YBa₂Cu₃O_{7-δ} crystalline phase (δ satisfies 0 ≦ δ ≦ 0.5).

## Description

### Technical Field

The present invention relates to an active material for battery useful as, for example, an anode active material for lithium battery and a battery using the same.

### Background Art

Lithium batteries are practically used in various fields such as information-related devices and communication devices due to their high electromotive force and high energy density. On the other hand, also in the field of automobiles, the use of lithium batteries as power sources for electric cars or hybrid cars has been contemplated because such cars need to be urgently developed from the viewpoint of environmental issues and resource issues. A lithium battery generally includes a cathode active material layer containing a cathode active material, an anode active material layer containing an anode active material, and an electrolyte layer provided between the cathode active material layer and the anode active material layer.

As an anode active material for lithium battery, a carbon material (e.g., graphite) is conventionally used. However, a carbon material has a low thermal stability, and therefore there has been a demand for an active material having a higher thermal stability from the viewpoint of safety. For example, Patent Literature 1 discloses a nonaqueous electrolyte battery using lithium titanate (LTO) as an anode active material. LTO is an oxide, and is therefore superior in thermal stability to a conventionally-used carbon material and has an advantage in safety.

However, the Li insertion-extraction potential (oxidation-reduction potential) of LTO relative to Li metal is about 1.5 V, which is higher than that of a conventionally-used carbon material (about 0.3 V), and therefore the resulting battery has a lower battery voltage. A battery voltage can be defined by, for example, the difference in Li insertion-extraction potential between a cathode active material and an anode active material. Therefore, when an anode active material having a higher Li insertion-extraction potential is used, there is a problem that the resulting battery has a lower battery voltage on condition that the same cathode active material is used.

Patent Literature 2 discloses a cathode for nonaqueous secondary battery which includes a cathode body containing a cathode active material such as lithium cobalt oxide and a current collector in close contact with the cathode body, wherein YBa₂Cu₃O_{7-δ} is used as the current collector. Patent Literature 3 discloses the use of YBa₂Cu₃O_{7-δ} as a conductive material in a cathode active material layer. YBa₂Cu₃O_{7-δ} is known as a compound that exhibits a superconducting phenomenon at about 90 K, and can be used as a current collector or a conductive material due to its high electron conductivity even at room temperature. However, it is totally unknown that YBa₂Cu₃O_{7-δ} functions as an active material, and the electric potential of YBa₂Cu₃O_{7-δ} has not been studied at all either.

### Citation List

### Patent Literatures

Patent Literature 1: Japanese Patent Application Laid-Open (JP-A) No. 2008-123787
Patent Literature 2: JP-A No. 2000-251877
Patent Literature 3: JP-A No. 2000-082464

### Summary of Invention

### Technical Problem

In view of the above circumstances, it is a major object of the present invention to provide an active material for battery having a high thermal stability and a low electric potential.

### Solution to Problem

In order to achieve the above object, the present invention provides an active material for battery which contains an Y element, a Ba element, a Cu element, and an O element and contains a YBa₂Cu₃O_{7-δ} crystalline phase (δ satisfies 0 ≦ δ ≦ 0.5).

According to the present invention, the active material for battery has a low electric potential because it has a YBa₂Cu₃O_{7-δ} crystalline phase. Therefore, the active material for battery according to the present invention is useful as, for example, an anode active material. Further, when the active material for battery according to the present invention is used as an anode active material in a lithium battery, the lithium battery can have a higher battery voltage than a conventional lithium battery because the Li insertion-extraction potential of the active material for battery according to the present invention is lower than that of conventionally-used LTO. Further, the active material for battery according to the present invention contains an O element and behaves as an oxide, and therefore has the advantage that it is superior in thermal stability to a conventionally-used carbon material.

In the present invention, it is preferred that the active material for battery mainly contains the YBa₂Cu₃O_{7-δ} crystalline phase. This is because the active material for battery can have a lower electric potential.

In the present invention, it is also preferred that the active material for battery has a Li insertion-extraction potential of 1. 4 V or less relative to Li metal. This is because when the active material for battery according to the present invention is used as an anode active material in a lithium battery, the lithium battery can have a higher battery voltage as compared to a case where LTO (Li insertion-extraction potential: 1.5 V) that is a conventional anode active material is used.

The present invention also provides an active material for battery which contains an Y element, a Ba element, a Cu element, and an O element and is crystalline, and whose Li insertion-extraction potential relative to Li metal is 1.4 V or less.

According to the present invention, the active material for battery has a low electric potential because its Li insertion-extraction potential relative to Li metal is a predetermined value or less. Further, the active material for battery according to the present invention contains an O element and behaves as an oxide, and therefore has the advantage that it is superior in thermal stability to a conventionally-used carbon material.

In the present invention, it is preferred that the active material for battery is an anode active material. This is because, for example, when the active material for battery according to the present invention is used as an anode active material in a lithium battery, the lithium battery can have a higher battery voltage as compared to a case where LTO that is a conventional anode active material is used.

The present invention also provides a battery comprising a cathode active material layer containing a cathode active material, an anode active material layer containing an anode active material, and an electrolyte layer provided between the cathode active material layer and the anode active material layer, wherein the cathode active material or the anode active material is the above-described active material for battery.

According to the present invention, the battery has a high level of safety because it uses the active material for battery having a high thermal stability. Particularly, when the anode active material layer contains the active material for battery, a battery having a high battery voltage can be obtained.

In the present invention, it is preferred that the anode active material is the above-described active material for battery. This is because, for example, when the battery according to the present invention is a lithium battery, the lithium battery can have a higher battery voltage than a battery using LTO that is a conventional anode active material.

In the present invention, it is also preferred that the amount of the above-described active material for battery contained in the anode active material layer is 40 wt% or more. This is because a battery having a high capacity can be obtained.

In the present invention, it is also preferred that the cathode active material is an active material whose Li insertion-extraction potential relative to Li metal is in the range of 4.6 V to 4.8 V. This is because a battery having a battery voltage of 3. 3 V to 4.1 V can be easily obtained by using such a cathode active material and the above-described active material for battery (anode active material) in combination.

In the present invention, it is also preferred that the difference in Li insertion-extraction potential relative to Li metal between the cathode active material and the anode active material is in the range of 3.3 V to 4.1 V. This is because the battery according to the present invention can be applied to devices currently commonly used (devices equipped with a battery having a battery voltage of 3.6 V) without design change.

In the present invention, it is also preferred that the battery is a lithium battery. This is because the battery can have a high battery voltage.

### Advantageous Effects of Invention

According to the present invention, it is possible to provide an active material for battery having a high thermal stability and a low electric potential.

### Brief Description of Drawings

FIG. 1 is a schematic sectional view of one example of a battery according to the present invention.
FIG. 2 is a graph showing the evaluation results of charge-discharge properties of a first evaluation battery.
FIG. 3 is a graph showing the evaluation results of charge-discharge properties of a second evaluation battery.

### Description of Embodiments

Hereinbelow, an active material for battery and a battery according to the present invention will be described in detail.

### A. Active Material for Battery

First, an active material for battery according to the present invention will be described. Embodiments of the active material for battery according to the present invention can be broadly divided into two categories. Hereinbelow, a first embodiment of the active material for battery according to the present invention and a second embodiment of the active material for battery according to the present invention will be described separately.

### 1. First Embodiment

The first embodiment of the active material for battery according to the present invention will be described. The active material for battery according to the first embodiment contains an Y element, a Ba element, a Cu element, and an O element and contains a YBa₂Cu₃O_{7-δ} crystalline phase (δ satisfies 0 ≦ δ ≦ 0.5).

According to this embodiment, the active material for battery has a low electric potential because it has a YBa₂Cu₃O_{7-δ} crystalline phase. Therefore, the active material for battery according to this embodiment is useful as, for example, an anode active material. Further, when the active material for battery according to this embodiment is used as an anode active material in a lithium battery, the lithium battery can have a higher battery voltage than a conventional lithium battery because the Li insertion-extraction potential of the active material for battery according to this embodiment is lower than that of conventionally-used LTO. Further, the active material for battery according to this embodiment contains an O element and behaves as an oxide, and therefore has the advantage that it is superior in thermal stability to a conventionally-used carbon material.

As described above, it has been known that a material having a YBa₂Cu₃O_{7-δ} crystalline phase is used as a current collector or a conductive material, but it has never been known that metal ions (e.g., Li ions) are inserted into and extracted from a YBa₂Cu₃O_{7-δ} crystalline phase, that is, a material having a YBa₂Cu₃O_{7-δ} crystalline phase functions as an active material. Under the circumstances, the present inventors have found that a material having a YBa₂Cu₃O_{7-δ} crystalline phase surprisingly functions as an active material, and in addition, its electric potential is low.

As described above, the active material for battery according to this embodiment has a YBa₂Cu₃O_{7-δ} crystalline phase. The ideal crystal structure of the crystalline phase is one in which seven O sites are occupied by an O element. However, in the actual crystal structure of the crystalline phase, not all the O sites are occupied by an O element. Therefore, δ denotes oxygen defect. Further, it is considered that oxygen defect enhances electron conductivity. In view of these considerations, in this embodiment, δ satisfies the relation 0 ≦ δ ≦ 0.5, and preferably satisfies the relation 0 ≦ δ ≦ 0.3. The presence of the YBa₂Cu₃O_{7-δ} crystalline phase can be determined by, for example, X-ray diffraction (XRD). Further, it is considered that the YBa₂Cu₃O_{7-δ} crystalline phase corresponds to a crystalline phase having a perovskite-type structure. Further, it is considered that the YBa₂Cu₃O_{7-δ} crystalline phase and a metal ion (e.g., a Li ion) react in the following manner: YBa₂Cu₃O_{7-δ} + xLi⁺ + xe⁻ ⇔ LiₓYBa₂Cu₃₋ₓO_{7-δ} + xCu. Therefore, it is considered that the YBa₂Cu₃O_{7-δ} crystalline phase functions as a so-called conversion-type active material.

The ratio of the YBa₂Cu₃O_{7-δ} crystalline phase contained in the active material for battery according to this embodiment is preferably high. More specifically, it is preferred that the active material for battery according to this embodiment mainly contains the YBa₂Cu₃O_{7-δ} crystalline phase. This is because the active material for battery according to this embodiment can have a lower electric potential. The phrase "mainly contains the YBa₂Cu₃O_{7-δ} crystalline phase" as used herein means that the ratio of the YBa₂Cu₃O_{7-δ} crystalline phase contained in the active material for battery is higher than that of any other crystalline phase contained in the active material for battery. The ratio of the YBa₂Cu₃O_{7-δ} crystalline phase contained in the active material for battery is preferably 50 mol% or more, more preferably 70 mol% or more, and even more preferably 90 mol% or more. The active material for battery according to this embodiment may be one composed of only the YBa₂Cu₃O_{7-δ} crystalline phase (i.e., a single-phase active material). It is to be noted that the ratio of the YBa₂Cu₃O_{7-δ} crystalline phase contained in the active material for battery can be determined by, for example, measuring the capacity of a battery produced using Li metal as a counter electrode.

The Li insertion-extraction potential of the active material for battery according to this embodiment relative to Li metal is preferably 1.5 V or less, more preferably 1.4 V or less, even more preferably 1.3 V or less, and particularly preferably 1.2 V or less. This is because, when the active material for battery according to this embodiment is used as an anode active material in a lithium battery, the lithium battery can have a higher battery voltage as compared to a case where LTO (Li insertion-extraction potential: 1.5 V) that is a conventional anode active material is used. On the other hand, the Li insertion-extraction potential of the active material for battery according to this embodiment relative to Li metal is preferably 0.5 V or more. In this embodiment, the Li insertion-extraction potential of the active material for battery can be defined as the average of the Li insertion and extraction potentials of the active material for battery. The Li insertion potential and the Li extraction potential can be determined by cyclic voltammetry (CV).

The active material for battery according to this embodiment may be used as a cathode active material or an anode active material, but is preferably used as the latter. This is because, for example, when the active material for battery according to this embodiment is used as an anode active material in a lithium battery, the lithium battery can have a higher battery voltage as compared to a case where LTO that is a conventional anode active material is used.

The electron conductivity of the active material for battery according to this embodiment tends to be higher when the ratio of the YBa₂Cu₃O_{7-δ} crystalline phase is higher. When the electron conductivity of the active material itself is high, the amount of a conductive material used can be reduced, which makes it possible to increase the amount of the active material used. This is advantageous in that a battery having a higher capacity can be obtained. The electron conductivity (at room temperature) of the active material for battery according to this embodiment is preferably, for example, 10⁻⁵ S/cm or more, and more preferably 10⁻³ S/cm or more.

The shape of the active material for battery according to this embodiment is preferably particulate. The average particle size of the active material for battery is in the range of, for example, 1 nm to 100 µm, and preferably in the range of 10 nm to 30 µm.

The active material for battery according to this embodiment can be used as an active material in various batteries because a metal (metal ions) can be inserted into and extracted from it. Examples of such various batteries include lithium batteries, sodium batteries, magnesium batteries, and calcium batteries. Among them, lithium batteries and sodium batteries are preferred, and lithium batteries are particularly preferred. The active material for battery according to this embodiment may be used as an active material for primary battery or an active material for secondary battery, but is preferably used as the latter. This is because a secondary battery can repeat charge and discharge and is therefore useful as, for example, a vehicle-mounted battery.

A method for producing the active material for battery according to this embodiment is not particularly limited as long as such an active material for battery as described above can be obtained. An example of a method for producing the active material for battery according to this embodiment is a solid-phase method. A specific example of the solid-phase method is one in which Y₂O₃, BaCO₃, and CuO are mixed in such a ratio that a YBa₂Cu₃O_{7-δ} crystalline phase can be obtained, and are heated in the air. For example, when Y₂O₃, BaCO₃, and CuO are mixed in a molar ratio of 1: 4: 6 (Y₂O₃: BaCO₃: CuO), a 1: 2 : 3 molar ratio of Y:Ba:Cu is achieved.

### 2. Second Embodiment

Hereinbelow, the second embodiment of the active material for battery according to the present invention will be described. The active material for battery according to the second embodiment contains an Y element, a Ba element, a Cu element, and an O element, is crystalline, and has a Li insertion-extraction potential of 1.4 V or less relative to Li metal.

According to this embodiment, the active material for battery has a low electric potential because its Li insertion-extraction potential relative to Li metal is a predetermined value or less. Therefore, the active material for battery according to this embodiment is useful as, for example, an anode active material for battery. Further, when the active material for battery according to this embodiment is used as an anode active material in a lithium battery, the lithium battery can have a higher battery voltage than a conventional lithium battery because the Li insertion-extraction potential of the active material for battery according to this embodiment is lower than that of conventionally-used LTO. Further, the active material for battery according to this embodiment contains an O element and behaves as an oxide, and therefore has the advantage that it is superior in thermal stability to a conventionally-used carbon material.

A major feature of the active material for battery according to this embodiment is that its Li insertion-extraction potential relative to Li metal is usually 1.4 V or less, and a preferred range of the Li insertion-extraction potential and a method for measuring the Li insertion-extraction potential are the same as those described above in "1. First Embodiment".

The active material for battery according to this embodiment has preferably a crystalline phase with a perovskite-type structure, and more preferably a crystalline phase with an oxygen-deficient perovskite-type structure. It is particularly preferred that the active material for battery according to this embodiment mainly contains such a crystalline phase.

The physical properties, method of production, and others of the active material for battery according to this embodiment are the same as those described above in "1. First Embodiment", and therefore a description thereof will not be repeated.

### B. Battery

Hereinbelow, a battery according to the present invention will be described. The battery according to the present invention comprises a cathode active material layer containing a cathode active material, an anode active material layer containing an anode active material, and an electrolyte layer provided between the cathode active material layer and the anode active material layer, wherein the cathode active material or the anode active material is the above-described active material for battery.

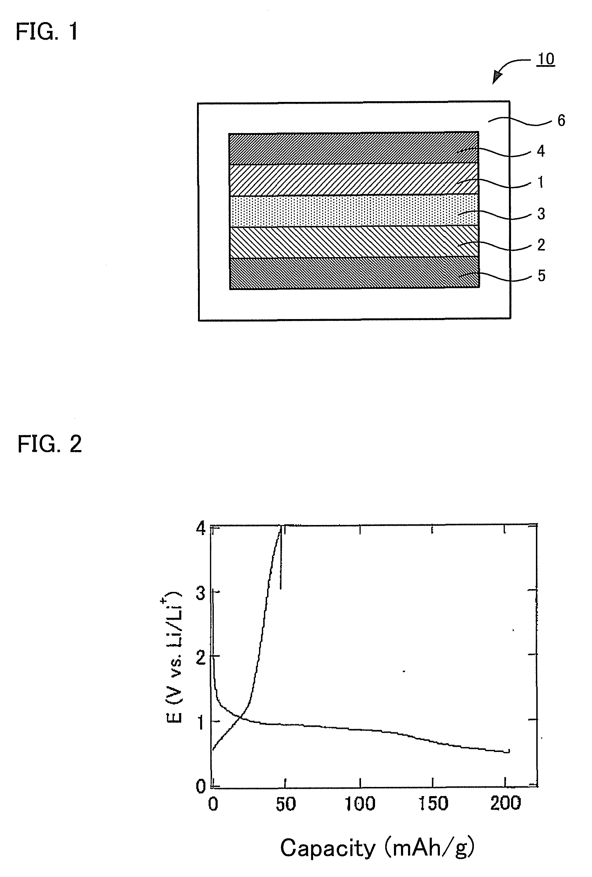

FIG. 1 is a schematic sectional view of one example of the battery according to the present invention. A battery 10 shown in FIG. 1 comprises a cathode active material layer 1, an anode active material layer 2, an electrolyte layer 3 provided between the cathode active material layer 1 and the anode active material layer 2, a cathode current collector 4 that collects current from the cathode active material layer 1, an anode current collector 5 that collects current from the anode active material layer 2, and a battery case 6 that holds these members. A major feature of the battery according to the present invention is that the cathode active material layer 1 or the anode active material layer 2 contains the active material for battery described above in "A. Active Material for Battery".

According to the present invention, the battery has a high level of safety because it uses the active material for battery having high thermal stability. Particularly, when the anode active material layer contains the active material for battery, a battery having a high battery voltage can be obtained.
Hereinbelow, each of the components of the battery according to the present invention will be described.

### 1. Anode Active Material Layer

First, the anode active material layer used in the present invention will be described. The anode active material layer used in the present invention contains at last an anode active material. The anode active material layer may contain, in addition to the anode active material, at least one of a conductive material, a binder, and a solid electrolyte material. Particularly, when the battery according to the present invention is a solid battery having a solid electrolyte layer, the anode active material layer preferably contains a solid electrolyte material. This is because the solid electrolyte layer is less likely to penetrate into the anode active material layer as compared to a liquid electrolyte layer (liquid electrolyte), and therefore there is a possibility that the inside of the anode active material layer has a low ion conductivity. However, the ion conductivity of the anode active material layer can be easily improved by adding a solid electrolyte material.

In the present invention, the anode active material is preferably the active material for battery described above in "A. Active Material for Battery". This is because, for example, when the battery according to the present invention is a lithium battery, the lithium battery can have a higher battery voltage than a battery using LTO that is a conventional anode active material. On the other hand, in the present invention, the above-described active material for battery may be used as the cathode active material while a conventional active material is used as the anode active material. In this case, the anode active material needs to be an active material whose electric potential is lower than that of the above-described active material for battery. Further, the above-described active material for battery does not contain a metal element (e.g., a Li element) that can form conductive ions, and therefore the anode active material preferably contains such a metal element. Particularly, when the battery according to the present invention is a lithium battery and contains the above-described active material for battery as the cathode active material, a lithium-containing active material such as Li metal or a Li alloy is preferably used as the anode active material.

The material of the conductive material is not particularly limited as long as it has desired electron conductivity. Examples of such a material include carbon materials. Specific examples of the carbon materials include acetylene black, ketjen black, carbon black, coke, carbon fibers, and graphite. The material of the binder is not particularly limited as long as it is chemically and electrically stable. Examples of such a material include fluorine-based binders such as polyvinylidene fluoride (PVDF) and polytetrafluoroethylene (PTFE) and rubber-based binders such as styrene-butadiene rubbers. The solid electrolyte material is not particularly limited as long as it has desired ion conductivity. Examples of such a solid electrolyte material include oxide solid electrolyte materials and sulfide solid electrolyte materials. It is to be noted that the solid electrolyte material will be described in detail later in "3. Electrolyte Layer".

The amount of the anode active material contained in the anode active material layer is preferably as large as possible from the viewpoint of capacity. More specifically, the amount of the anode active material contained in the anode active material layer is preferably 40 wt% or more, more preferably 45 wt% or more, and even more preferably 50 wt% or more. On the other hand, the amount of the anode active material contained in the anode active material layer is preferably 99 wt% or less, and more preferably 95 wt% or less. The amount of the conductive material contained in the anode active material layer is preferably as small as possible so long as desired electron conductivity can be achieved, and is preferably in the range of, for example, 1 wt% to 30 wt%. The amount of the binder contained in the anode active material layer is preferably as small as possible so long as the anode active material etc. can be stably fixed, and is preferably in the range of, for example, 1 wt% to 30 wt%. The amount of the solid electrolyte material contained in the anode active material layer is preferably as small as possible so long as desired ion conductivity can be achieved, and is preferably in the range of, for example, 1 wt% to 40 wt%.

The thickness of the anode active material layer widely varies depending on the structure of the battery, but is preferably in the range of, for example, 0.1 µm to 1000 µm.

### 2. Cathode Active Material Layer

Hereinbelow, the cathode active material layer used in the present invention will be described. The cathode active material layer used in the present invention contains at least a cathode active material. The cathode active material layer may contain, in addition to the cathode active material, at least one of a conductive material, a binder, and a solid electrolyte material. Particularly, when the battery according to the present invention is a solid battery having a solid electrolyte layer, the cathode active material layer preferably contains a solid electrolyte material. This is because the solid electrolyte layer is less likely to penetrate into the cathode active material layer as compared to a liquid electrolyte layer (liquid electrolyte), and therefore there is a possibility that the inside of the cathode active material layer has a low ion conductivity. However, the ion conductivity of the cathode active material layer can be easily improved by adding a solid electrolyte material.

In the present invention, the cathode active material is preferably an active material whose electric potential is higher than that of the above-described active material for battery. That is, the above-described active material for battery is preferably used not as the cathode active material but as the anode active material. This is because, for example, when the battery according to the present invention is a lithium battery, the lithium battery can have a higher battery voltage than a battery using LTO that is a conventional anode active material.

When the above-described active material for battery is used as the anode active material, a common active material can be used as the cathode active material. For example, when the battery according to the present invention is a lithium battery, examples of such a cathode active material include: layered cathode active materials such as LiCoO₂, LiNiO₂, LiCo_{1/3}Ni_{1/3}Mn_{1/3}O₂, LiVO₂, and LiCrO₂; spinel cathode active materials such as LiMn₂O₄, Li(Ni_{0.25}Mn_{0.75})₂O₄, and LiCoMnO₄, and Li₂NiMn₃O₈; and olivine cathode active materials such as LiCoPO₄, LiMnPO₄, and LiFePO₄.

The cathode active material used in the present invention is preferably an active material whose Li insertion-extraction potential relative to Li metal is 4.5 V or more, and more preferably an active material whose Li insertion-extraction potential relative to Li metal is in the range of 4.6 V to 4.8 V. This is because a battery having a battery voltage of 3.3 V to 4. 1 V can be easily obtained by using such a cathode active material and the above-described active material for battery (anode active material) in combination. It is to be noted that the reason why such a battery voltage is preferred will be described later. The Li insertion-extraction potential of the cathode active material relative to Li metal can be calculated by the same method as described above in "A. Active Material for Battery".

The cathode active material used in the present invention is preferably an active material (Mn-containing active material) containing at least a Li element, a Mn element, and an O element. In this case, the active material further contains preferably at last one element selected from the group consisting of a Ni element, a Cr element, an Fe element, a Cu element, and a Co element, more preferably at least one element selected from the group consisting of a Ni element, a Cr element, an Fe element, and a Cu element, and particularly preferably a Ni element. The cathode active material is preferably a spinel active material. This is because the cathode active material can have a high Li insertion-extraction potential relative to Li metal. Examples of such a cathode active material include LiMn₂O₄ (4.0 V), Li (Ni_{0.25}Mn_{0.75})₂O₄ (4. 7 V), LiCoMnO₄ (5.0 V), Li₂FeMn₃O₈ (4.9 V), Li₂CuMn₃O₈ (4.9 V), and Li₂CrMn₃O₈ (4.8V). It is to be noted that the above electric potentials represent Li insertion-extraction potentials relative to Li metal.

In the present invention, the difference in Li insertion-extraction potential relative to Li metal between the cathode active material and the anode active material is preferably in the range of 3.3 V to 4.1 V, more preferably in the range of 3.3 V to 4.0 V, even more preferably in the range of 3.4 V to 3.8 V, and particularly preferably in the range of 3.5 V to 3.7 V. This is because the battery according to the present invention can be applied to devices currently commonly used (devices equipped with a battery having a battery voltage of 3.6 V) without design change.

Here, a battery voltage can be defined by the difference in Li insertion-extraction potential between a cathode active material and an anode active material. The Li insertion-extraction potential of conventionally-used LiCoO₂ (cathode active material) relative to Li metal is about 3.9 V and the Li insertion-extraction potential of a conventionally-used carbon material (anode active material) relative to Li metal is about 0.3 V, and therefore a difference of about 3.6 V between them is the battery voltage of a conventional lithium battery. LiCoO₂ is widely used in common lithium batteries, and therefore portable devices such as mobile phones, game machines, laptop computers are often designed on the assumption that a battery having a battery voltage of about 3. 6 V is used. On the other hand, Co contained in LiCoO₂ is a rare metal, and therefore it is necessary to consider the replacement of LiCoO₂ with a Mn-containing active material based on Mn to reduce the usage of Co.

However, a battery using a Mn-containing active material instead of LiCoO₂ currently commonly used cannot have a battery voltage of about 3.6 V even when a conventional anode active material such as a carbon material or LTO is used. In this case, there is a problem that the design of devices using such a battery needs to be changed. On the other hand, a battery having a battery voltage of 3. 3 V to 4.1 V can be easily obtained by using the above-described active material for battery (e.g., an active material having a Li insertion-extraction potential of 0.7 V to 1.3 V) as the anode active material and the above-described Mn-containing active material (e.g., an active material having a Li insertion-extraction potential of 4.6 V to 4.8 V) as the cathode active material. This is advantageous in that it is not necessary to change the design of conventional devices. Further, the use of such a Mn-containing active material as the cathode active material makes it possible to reduce the usage of Co that is a rare metal.

The shape of the cathode active material is preferably particulate. The average particle size of the cathode active material is in the range of, for example, 1 nm to 100 µm, and preferably in the range of 10 nm to 30 µm. It is to be noted that examples of the conductive material, the binder, and the solid electrolyte material used in the cathode active material layer and the amounts of them contained in the cathode active material layer are the same as those described above with reference to the anode active material layer, and therefore a description thereof will not be repeated. The thickness of the cathode active material layer widely varies depending on the structure of the battery, but is preferably in the range of, for example, 0.1 µm to 1000 µm.

### 3. Electrolyte Layer

Hereinbelow, the electrolyte layer used in the present invention will be described. The electrolyte layer used in the present invention is provided between the cathode active material layer and the anode active material layer. The electrolyte layer contains an electrolyte that allows lithium ion conduction between the cathode active material and the anode active material. The form of the electrolyte layer is not particularly limited, and examples of the electrolyte layer include a liquid electrolyte layer, a gel electrolyte layer, and a solid electrolyte layer.

A liquid electrolyte layer is usually formed using a nonaqueous liquid electrolyte. The type of nonaqueous liquid electrolyte varies depending on the type of battery to be produced. For example, a nonaqueous liquid electrolyte used in lithium batteries usually contains a lithium salt and a nonaqueous solvent. Examples of the lithium salt include: inorganic lithium salts such as LiPF₆, LiBF₄, LiClO₄, and LiAsF₆; organic lithium salts such as LiCF₃SO₃, LiN(CF₃SO₂)₂, LiN(C₂F₅SO₂)₂, and LiC(CF₃SO₂)₃. Examples of the nonaqueous solvent include ethylene carbonate (EC), propylene carbonate (PC), dimethyl carbonate (DMC), diethyl carbonate (DEC), ethyl methyl carbonate (EMC), butylene carbonate (BC), γ-butyrolactone, sulfolane, acetonitrile, 1,2-dimethoxymethane, 1,3-dimethoxypropane, diethyl ether, tetrahydrofuran, 2-methyltetrahydrofuran, and mixtures of two or more of them. The concentration of the lithium salt in the nonaqueous liquid electrolyte is in the range of, for example, 0.5 mol/L to 3 mol/L. It is to be noted that the nonaqueous liquid electrolyte used in the present invention may be a low-volatile liquid such as an ionic liquid.

A gel electrolyte layer can be obtained by, for example, adding a polymer to a nonaqueous liquid electrolyte to turn it into a gel. More specifically, a nonaqueous liquid electrolyte can be turned into a gel by adding a polymer such as polyethylene oxide (PEO), polyacrylonitrile (PAN), or polymethyl methacrylate (PMMA) thereto.

A solid electrolyte layer is formed using a solid electrolyte material. Examples of the solid electrolyte material include oxide solid electrolyte materials and sulfide solid electrolyte materials. For example, when the battery according to the present invention is a lithium battery, the solid electrolyte material is preferably a sulfide solid electrolyte material. This is because a high-output battery having a high Li-ion conductivity can be obtained. Examples of a sulfide solid electrolyte material having Li-ion conductivity include solid electrolyte materials containing Li, S, and a third component A. The third component A is, for example, at least one selected from the group consisting of P, Ge, B, Si, I, Al, Ga, and As. Among them, the sulfide solid electrolyte material used in the present invention is preferably a compound using Li₂S and a sulfide MS other than Li₂S. Specific examples of such a compound include an Li₂S-P₂S₅ compound, an Li₂S-SiS₂ compound, and an Li₂S-GeS₂ compound. Among them, an Li₂S-P₂S₅ compound is preferred due to its high Li-ion conductivity. When a molar ratio between Li₂S and the sulfide MS is defined as xLi₂S-(100-x)MS, x satisfies preferably the relation 50 ≦ x ≦ 95, and more preferably the relation 60 ≦ x ≦ 85. It is to be noted that the term "Li₂S-P₂S₅ compound" refers to a sulfide solid electrolyte material using Li₂S and P₂S₅. The same goes for the other compounds. For example, an amorphous Li₂S-P₂S₅ compound can be obtained by mechanical milling or melt quenching using Li₂S and P₂S₅.

The solid electrolyte material used in the present invention may be amorphous or crystalline. A crystalline sulfide solid electrolyte material can be obtained by, for example, burning an amorphous sulfide solid electrolyte material. For example, crystalline Li₇P₃S₁₁ having a high Li-ion conductivity can be obtained by burning an amorphous sulfide solid electrolyte material having a composition of 70Li₂S-30P₂S₅. The shape of the solid electrolyte material is preferably particulate. The average particle size of the solid electrolyte material is in the range of, for example, 1 nm to 100 µm, and preferably in the range of 10 nm to 30 µm.

The thickness of the electrolyte layer widely varies depending on the type of electrolyte used and the structure of the battery, but is in the range of, for example, 0.1 µm to 1000 µm, and preferably in the range of 0.1 µm to 300 µm.

### 4. Other Components

The battery according to the present invention comprises at least the above-described anode active material layer, cathode active material layer, and electrolyte layer. Usually, the battery according to the present invention further comprises a cathode current collector that collects current from the cathode active material layer and an anode current collector that collects current from the anode active material layer. Examples of the material of the cathode current collector include SUS, aluminum, nickel, iron, titanium, and carbon. Among them, SUS is preferred. On the other hand, examples of the material of the anode current collector include SUS, copper, nickel, and carbon. Among them, SUS is preferred. The thickness, shape, etc. of each of the cathode current collector and the anode current collector are preferably appropriately selected depending on, for example, the intended use of the battery.

The battery according to the present invention may include a separator between the cathode active material layer and the anode active material layer. This is because a battery having a higher level of safety can be obtained. Examples of the material of the separator include porous membranes made of polyethylene, polypropylene, cellulose, or polyvinylidene fluoride and non-woven fabrics such as resin non-woven fabrics and glass fiber non-woven fabrics. The battery case used in the present invention may be one used for common batteries. An example of such a battery case is one made of SUS.

### 5. Battery

The battery according to the present invention is not particularly limited as long as it comprises the above-described cathode active material layer, anode active material layer, and electrolyte layer. Examples of the battery according to the present invention include lithium batteries, sodium batteries, magnesium batteries, and calcium batteries. Among them, lithium batteries and sodium batteries are preferred, and lithium batteries are particularly preferred. Further, the battery according to the present invention may be one whose electrolyte layer is a solid electrolyte layer or one whose electrolyte layer is a liquid electrolyte layer. Further, the battery according to the present invention may be a primary battery or a secondary battery, but is preferably a secondary battery. This is because a secondary battery can repeat charge and discharge, and is therefore useful as, for example, a vehicle-mounted battery. Further, the battery according to the present invention may be, for example, a coin-type battery, a laminate-type battery, a cylinder-type battery, or a rectangular-type battery. A method for producing the battery according to the present invention is not particularly limited, and is the same as a common method for producing a battery.

It is to be noted that the present invention is not limited to the above embodiments. The above embodiments are mere examples, and those having substantially the same structure as technical ideas described in the claims of the present invention and providing the same functions and effects are included in the technical scope of the present invention. Examples

Hereinbelow, the present invention will be described more specifically with reference to the following examples.

### [Example]

YBa₂Cu₃O_{7-δ} (0 < δ ≦ 0.5, manufactured by Wako Pure Chemical Industries, Ltd.) was prepared as an active material for battery according to the present invention. This active material for battery was a single-phase active material having a YBa₂Cu₃O_{7-δ} crystalline phase.

### [Evaluation]

### (1) Charge-Discharge Properties

### (First Evaluation Battery)

An evaluation battery was produced using the active material obtained in Example as a cathode active material to evaluate the charge-discharge properties of the active material. First, the cathode active material, polytetrafluoroethylene (PTFE) as a binder, and acetylene black (AB) HS-100 as a conductive material were prepared. Then, the cathode active material, PTFE, and AB were mixed in a weight ratio of 70:5:25 (cathode active material:PTFE:AB) to obtain a cathode composite (10 mg). Then, a liquid electrolyte was prepared by dissolving LiPF₆ to a concentration of 1 mol/L in a solvent obtained by mixing ethylene carbonate (EC) and diethyl carbonate (DEC) in a volume ratio of 1:1, and Li metal was prepared as an anode active material. A coin-type evaluation battery was produced using these components.

Then, the thus obtained evaluation battery was subjected to charge and discharge at constant current (0.2 mA) in a charge-discharge range of 0.5 V to 3.0 V. The charge-discharge was started from discharge. The results are shown in FIG. 2. As shown in FIG. 2, a reversible reaction occurred in the battery in the range of about 0.5 V to 1.3 V. From this, it has been confirmed that the Li insertion-extraction potential of the active material relative to Li metal is 1.4 V or less. Particularly, it has been confirmed that the main discharge reaction of the evaluation battery occurs in the range of about 0.8 V to 1.1 V and the main charge reaction of the evaluation battery occurs in the range of about 0.6 V to 1.3 V. It is considered that the behavior of the evaluation battery at 0.7 V or less shown by the charge-discharge curves is influenced by AB used as a conductive material. In consideration of the influence of AB, it is estimated that the capacity of the active material for battery is about 140 mAh/g.

### (Second Evaluation Battery)

An evaluation battery was produced using Li (Ni_{0.25}Mn_{0.75})₂O₄ as a cathode active material to evaluate the charge-discharge properties of the active material. It is to be noted that the evaluation battery was a coin-type battery produced in the same manner as described above except that the active material obtained in Example was changed to Li(Ni_{0.25}Mn_{0.75})₂O₄.

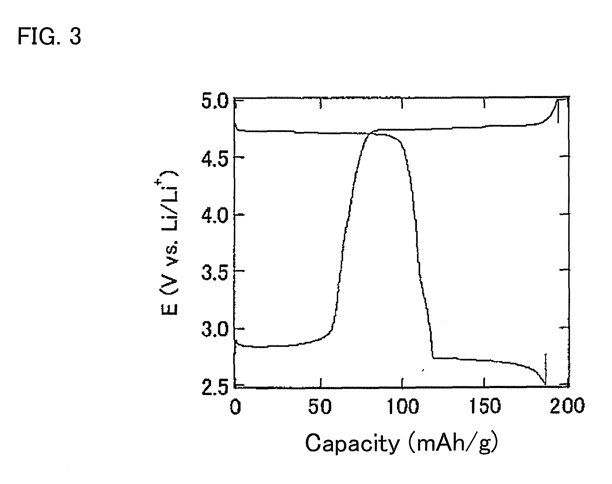

Then, the thus obtained evaluation battery was subjected to charge and discharge at a constant current (0.2 mA) in a charge-discharge range of 2.5 V to 5.0 V. The charge-discharge was started from charge. The results are shown in FIG. 3. As shown in FIG. 3, a reversible reaction occurred in the battery in the range of about 4.6 V to 4.8 V. From this, it has been confirmed that the Li insertion-extraction potential of the active material relative to Li metal is in the range of 4.6 V to 4.8 V. It is to be noted that in FIG. 3, the reversible reaction that occurred in the battery is observed also in the range of 2. 6 V to 2. 9 V. However, the higher electric potential is defined as the Li insertion-extraction potential of the active material relative to Li metal here.

### (Third Evaluation Battery)

An evaluation battery was produced using the active material for battery according to the present invention as an anode active material and Li (Ni_{0.25}Mn_{0.75})₂O₄ as a cathode active material. First, the cathode active material, PTFE, and AB were mixed in a weight ratio of 70:5:25 (cathode active material:PTFE:AB) to obtain a cathode composite (10 mg). Then, the anode active material, PTFE, and AB were mixed in a weight ratio of 70:5:25 (anode active material:PTFE:AB) to obtain an anode composite (10 mg). Then, a liquid electrolyte was prepared by dissolving LiPF₆ to a concentration of 1 mol/L in a solvent obtained by mixing ethylene carbonate (EC) and diethyl carbonate (DEC) in a 1:1 volume ratio. A coin-type evaluation battery was produced using these components.

Then, the thus obtained evaluation battery was subjected to charge and discharge at a constant current (0.2 mA). The charge-discharge was started from charge. As a result, it has been confirmed that the main charge reaction of the evaluation battery occurs in the range of about 3.5 V to 4.1 V and the main discharge reaction of the evaluation battery occurs in the range of about 3.3 V to 4.0 V. Then, the evaluation battery was subjected to 10 charge-discharge cycles under the same conditions as described above. The results of the 1st cycle, the 2nd cycle, and the 10th cycle are shown in Table 1. As can be seen from Table 1, the battery according to the present invention exhibits excellent cycle characteristics from the 2nd cycle.

**[Table 1]**

| | Discharge Capacity (mAh/g) | Charge Capacity (mAh/g) | Coulombic Efficiency (discharge/charge) |
|---|---|---|---|
| 1 st cycle | 201 | 52 | 3.87 |
| 2nd cycle | 52 | 52 | 1 |
| 10th cycle | 51 | 51 | 1 |

### (3) Cyclic Voltammetry Measurement

The active material obtained in Example was subjected to cyclic voltammetry (CV) to calculate its Li insertion-extraction potential relative to Li metal. The measurement was performed using an electrochemical measuring system (Model 147055BEC™ manufactured by Solartron) in a potential range of 0.5 V to 4.0 V (vs Li/Li⁺) at a sweep rate of 0.1 mV/sec. As a result, the Li insertion potential of the active material was 0.89 V (vs Li/Li⁺), the Li extraction potential of the active material was 1.12 V (vs Li/Li⁺), and the Li insertion-extraction potential of the active material was 1.005 V (vs Li/Li⁺).

### Reference Signs List

- 1: Cathode active material layer
- 2: Anode active material layer
- 3: Electrolyte layer
- 4: Cathode current collector
- 5: Anode current collector
- 6: Battery case
- 10: Battery

## Claims

1. An active material for battery which contains an Y element, a Ba element, a Cu element, and an O element and contains a YBa₂Cu₃O_{7-δ} crystalline phase (δ satisfies 0 ≦ δ ≦ 0.5).

2. The active material for battery according to claim 1, mainly containing the YBa₂Cu₃O_{7-δ} crystalline phase.

3. The active material for battery according to claim 1 or 2, whose Li insertion-extraction potential relative to Li metal is 1.4 V or less.

4. An active material for battery which contains an Y element, a Ba element, a Cu element, and an O element and is crystalline, and whose Li insertion-extraction potential relative to Li metal is 1.4 V or less.

5. The active material for battery according to any one of claims 1 to 4, which is an anode active material.

6. A battery comprising: a cathode active material layer containing a cathode active material; an anode active material layer containing an anode active material; and an electrolyte layer provided between the cathode active material layer and the anode active material layer, **characterized in that**
the cathode active material or the anode active material is the active material for battery according to any one of claims 1 to 5.

7. The battery according to claim 6, **characterized in that** the anode active material is the active material for battery.

8. The battery according to claim 7, **characterized in that** the anode active material layer contains the active material for battery in an amount of 40 wt% or more.

9. The battery according to claim 7 or 8, **characterized in that** the cathode active material is an active material whose Li insertion-extraction potential relative to Li metal is in a range of 4.6 V to 4.8 V.

10. The battery according to any one of claims 7 to 9, **characterized in that** a difference in Li insertion-extraction potential relative to Li metal between the cathode active material and the anode active material is in a range of 3.3 V to 4.1 V.

11. The battery according to any one of claims 6 to 10, which is a lithium battery.
